# EUROPÄISCHE PATENTSCHRIFT

(11) **EP 1 039 166 B1**
(45) Veröffentlichungstag und Bekanntmachung des Hinweises auf die Patenterteilung: **01.06.2005**
(21) Anmeldenummer: 00111457.8
(22) Anmeldetag: 11.03.1994
(51) Int. Cl.: F16D 65/56

(54) **Druckluftbetätigte Scheibenbremse**
Compressed-air actuated disc brake
Frein à disque actionné par air comprimé

(30) Priorität: 13.10.1993 DE 4334914
(43) Veröffentlichungstag der Anmeldung: 27.09.2000
(62) Teilanmeldung aus: 94103781.4
(73) Patentinhaber: KNORR-BREMSE SYSTEME FÜR NUTZFAHRZEUGE GMBH, 80809 München (DE)
(72) Erfinder: Baumgartner, Hans, 85368 Moosburg (DE); Bieker, Dieter, 83080 Oberaudorf (DE); Iraschko, Johann, 85301 Schweitenkirchen (DE)
(74) Vertreter: Specht, Peter, Dipl.-Phys.

(56) Entgegenhaltungen:
- DE-A- 3 716 202
- DE-A- 4 034 165
- US-A- 3 900 085
- US-A- 4 050 554
- US-A- 4 064 973
- US-A- 4 942 945

## Beschreibung

Die vorliegende Erfindung bezieht sich auf eine druckluftbetätigte Scheibenbremse gemäß dem Oberbegriff des Anspruchs 1, die insbesondere für Straßennutzfahrzeuge vorgesehen ist.

Druckluftbetätigte bzw. pneumatische Scheibenbremsen der gattungsgemäßen Art sind beispielsweise aus der DE-OS 37 16 202, der DE-OS 40 32 885 sowie aus der nicht vorveröffentlichten DE-OS 42 12 384 bekannt. Bei diesen bekannten Scheibenbremsen wird eine Bremsscheibe von einem in Axialrichtung verschiebbar gelagerten Bremssattel umfaßt, wobei auf einer Seite des Bremssattels eine druckluftbetätigte Zuspannvorrichtung angeordnet ist, bei deren Betätigung eine auf dieser Seite der Bremsscheibe befindliche Bremsbacke gegen die betreffende Reibfläche der Bremsscheibe gedrückt wird, worauf sich der Bremssattel aufgrund der Reaktionskräfte in Gegenrichtung verschiebt und dadurch eine auf der gegenüberliegenden Seite befindliche Bremsbacke gleichfalls gegen die Bremsschiebe preßt. Zum Stand der Technik werden noch die US 4 050 554 A, die US 4 064 973 A, die US 4 942 945 A und die US 3 900 085 A genannt.

Die Zuspannvorrichtung weist bei diesen bekannten Scheibenbremsen als Betätigungsorgan einen Drehhebel auf, der um eine zur Ebene der Bremsscheibe parallel verlaufende Drehachse schwenkbar gelagert ist. Der Drehhebel liegt hierbei auf seiner der Bremsscheibe zugewandten Seite mittels eines Exzenters etwa längsmittig an einer sich parallel zur Drehachse erstreckenden Traverse an, die bezüglich der Bremsscheibe verschiebbar geführt ist und in der zwei mit einem Außengewinde versehene Stellspindeln in einem jeweils zugeordneten Innengewinde der Traverse in paralleler Anordnung verstellbar verschraubt sind. Aufgrund der Verwendung zweier Stellspindeln wird eine derartige Zuspannvorrichtung auch als "zweispindelige" Zuspannvorrichtung bezeichnet.

Die beiden Stellspindeln wirken jeweils über ein an ihrem bremsscheibenseitigen Ende sitzendes Druckstück auf die zuspannseitig im Bremssattel bezüglich der Bremsscheibe verschiebbar gelagerte Bremsbacke ein. Mittels mindestens einer Nachstelleinrichtung, die axial verschiebbar, jedoch drehfest mit einer der beiden Stellspindeln gekoppelt ist und bei jeder Betätigung des Drehhebels über eine Rutschkupplung auf die betreffende Stellspindel einwirkt, wird erreicht, dass das sich infolge Belagverschleiß änderne Lüftspiel seinen korrekten Sollwert konstant beibehält. Die von der Nachstelleinrichtung im Falle von Belagverschleiß bewirkte Drehung der genannten Stellspindel wird von einer Synchronisationseinrichtung so auf die andere Stellspindel übertragen, dass diese um den gleichen Winkel gedreht wird und folglich ihren Abstand zur Bremsscheibe um exakt die gleiche Wegstrecke verringert.

Im einfachsten Fall ist in der genannten zweiten Stellspindel lediglich eine Mitnehmervorrichtung angeordnet, welche diese Stellspindel drehfest mit der Synchronisationseinrichtung koppelt und beispielsweise aus einem in eine innere Axialverzahnung der Stellspindel eingreifenden Zahnrad gebildet sein kann, das über eine Welle mit der Synchronisationseinrichtung gekoppelt ist. Jedoch kann für die zweite Stellspindel gleichfalls eine eigene Nachstelleinrichtung vorgesehen sein, wobei in diesem Fall doppelt so große Nachstellkräfte erzielbar sind, was jedoch mit entsprechend höheren Herstellungskosten verbunden ist.

Wenn lediglich eine Stellspindel vorhanden ist ("einspindelige" Zuspannvorrichtung), entfällt selbstverständlich die Synchronistationseinrichung.

Wie bereits vorstehend erläutert wurde, ist die präzise Einstellung eines stets gleich großen Lüftspiels für die sichere und zuverlässige Funktion der gattungsgemäßen Scheibenbremsen von wesentlicher Bedeutung. Obgleich die von der Anmelderin bereits entwickelten Nachstelleinrichtungen zuverlässig und hochgenau arbeiten (diesbezüglich sein beispielsweise auf die DE-OS 40 34 165 der Anmelderin verwiesen), hat es sich in der Praxis dennoch als schwierig erwiesen, das Lüftspiel im gewünschten Toleranzbereich zu halten. Insbesondere tritt in der Praxis häufig eine ungewollte Verkleinerung des Lüftspiels auf, so dass die Bremse ggf. sogar zum Blockieren neigen kann.

Der Erfindung liegt demnach die Aufgabe zugrunde, eine druckluftbetätigte Scheibenbremse gemäß dem Oberbegriff des Anspruchs 1 derart weiterzubilden, dass stets ein konstant großes Lüftspiel erzielbar ist.

Diese Aufgabe wird erfindungsgemäß mit Merkmalen des Anspuchs 1 gelöst.

Hierdurch wird erreicht, dass jede in der Praxis auftretende Rüttelbeanspruchung sicher außerstande ist, eine ungewollte Drehung der Stellspindel(n) herbeizuführen, sodass das Lüftspiel stets konstant bleibt. Gleichwohl ist die Nachstelleinrichtung bei geeigneter Wahl des Drehmoments in der Lage, die Stellspindel(n) bei Auftritt von Bremsbelagverschleiß zu drehen, wobei das hierfür erforderlichem, etwas erhöhte Drehmoment bei den gegebenen Kraftverhältnissen bzw. Antriebsleistungen der Nachstelleinrichtung keinerlei Probleme bereitet.

Bei der Feder kann es sich z.B. um eine Schraubenfeder handeln, die um die Antriebswelle der Gewindespindel herumgewickelt ist und die entsprechend der Lehre des Anspruchs 2 in axialer Richtung auf ein am Ende der Antriebswelle sitzendes Zahnrad einwirkt, sodass über dieses ein entsprechendes Bremsmoment auf die Kraftübertragung ausgeübt wird, das die Gewindespindel am selbsttätigen Drehen hindert. Durch diese Anordnung wird ferner erreicht, dass auf die kraftübertragenden Elemente der Synchronisationseinrichtung ständig ein Gegendrehmoment ausgeübt wird; dadurch wird aufgrund der insofern erzielten Vorspannung der kraftübertragenden Elementen ein erhöhter Verschleiß dieser Elemente bei Rüttelbeanspruchgung vermieden

Alternativ hierzu kann die um die Antriebswelle der Gewindespindel herumgewikkelte Schraubenfeder nach der Lehre des Anspruchs 3 auch so gestaltet sein, dass sie mit ihrem einen Ende am Gehäuse der Zuspannvorrichtung befestigt ist und mit ihrem anderen Ende vom Drehhebel betätigt wird; die Betätigung des betreffenden Endes der Schraubenfeder wird hierbei so konstruiert, dass lediglich im gelösten Betriebszustand der Bremse ein Bremsmoment auf die Antriebswelle ausgeübt wird. Diese Anordnung ist demnach für solche Anwendungsfälle geeignet, bei denen die Nachstelleinrichtung und/oder die Synchronisationseinrichtung im Betrieb möglichst geringen Bremsmomenten ausgesetzt sein sollen bzw. bei denen ein hoher Wirkungsgrad angestrebt wird.

Die Erfindung wird nunmehr nachstehend anhand der Beschreibung von Ausführungsbeispielen unter Bezugnahme auf die Zeichnung näher erläutert. Es zeigen:
- **Fig. 1A und 1B**: anhand von Querschnittsansichten den Aufbau eines ersten Ausführungsbeispiels, wobei Fig. 1B eine vergrößerte Teilansicht der Fig. 1A wiedergibt;
- **Fig. 2A und 2B**: eine entsprechende Darstellung eines zweiten Ausführungsbeispiels;
- **Fig. 3A und 3B**: eine entsprechende Darstellung eines dritten Ausführungsbeispiels;
- **Fig. 4A und 4B**: ein weiteres Ausführungsbeispiel, bei dem die Klemmung der Stellspindeln durch eine Stirnverzahnung erfolgt;
- **Fig. 5 Fig. 6A bis 6C**: eine Variante des in Fig. 3 gezeigten Ausführungsbeispiels; ein weiteres Ausführungsbeispiel, das für eine Synchronisationseinrichtung mit einer Gliederkette geeignet ist; und
- **Fig. 7A und 7B**: ein Ausführungsbeispiel, das für eine Synchronisationseinrichtung mit einem Getriebzug geeignet ist.

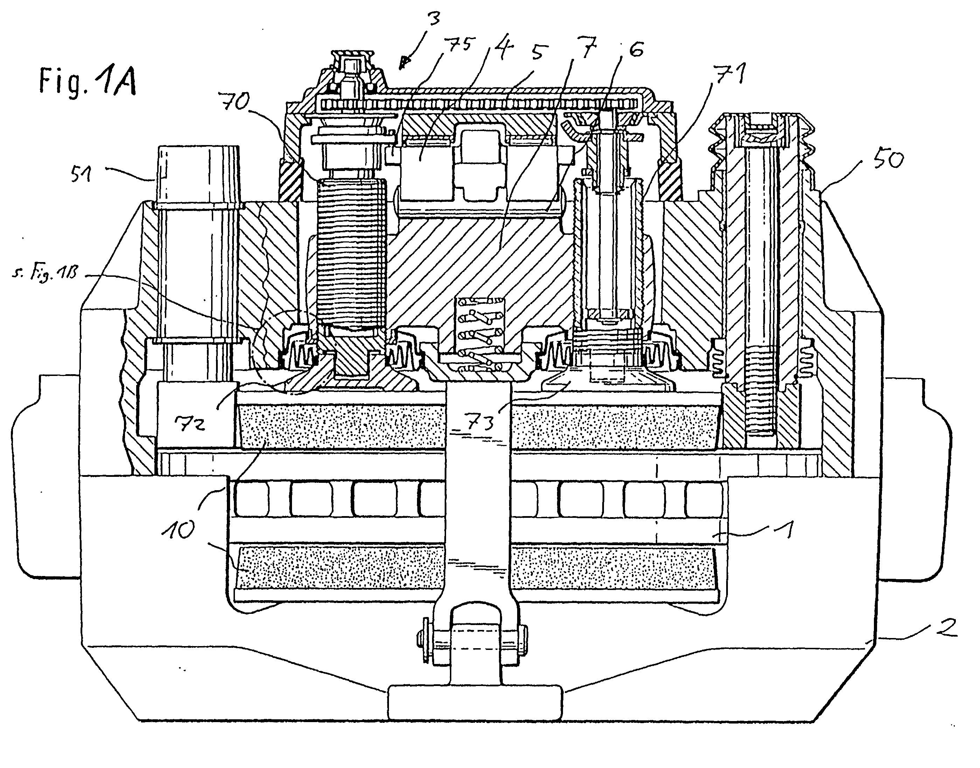

Die Fig. 1, 2, 4, 6 und 7 zeigen keine Ausführungsformen der Erfindung.

Um die der Erfindung zugrundeliegende Problematik zu verdeutlichen, sollen zunächst der prinzipielle Aufbau und die Wirkungsweise der gattungsgemäßen Scheibenbremse und deren Zuspannvorrichtung näher erläutert werden.

Wie aus den Figuren 1A und 7A zu erkennen ist, wird eine (innenbelüftete) Bremsscheibe 1, die an einer nicht näher bezeichneten Achse eines Nutzfahrzeugs befestigt ist, von einem Bremssattel 2 umfaßt. Der Bremssattel 2 ist gemäß Fig. 1A mittels eines starren Führungslagers 52 sowie mittels eines Ausgleichslagers 51 in axialer Verschiebbarkeit bezüglich der Bremsscheibe 1 am Fahrzeug gelagert. Im übrigen sind Aufbau und Funktion des Bremssattels bekannt, so daß sich eine nähere Erläuterung erübrigt.

Auf der in Fig. 7A rechten bzw. der in Fig. 1A oberen Seite der Bremsscheibe 1 ist eine schematisch mit dem Bezugszeichen 3 bezeichnete zweispindelige Zuspannvorrichtung angeordnet. Im Bremssattel 2 ist ein im wesentlichen halbkreisförmiges Drehlager 30 vorgesehen, dessen Drehachse parallel zur Ebene der Bremsscheibe 1 verläuft und das den entsprechend abgerundeten Bereich eines Drehhebels 4 aufnimmt, so daß der Drehhebel 4 parallel zur Ebene der Bremsscheibe 1 verschwenkt werden kann. Zur Bestätigung des Drehhebels 4 ist ein lediglich schematische dargestellter Bremszylinder 42 vorgesehen, der mit einem Kolben in eine geeignet geformte Ausnehmung eines Betätigungsarms 4a des Drehhebels 4 eingreift. Wenn der Bremszylinder 40 mit der Druckluft beaufschlagt wird, wird der Betätigungsarm 4a des Drehhebels 4 folglich von seiner gezeigten Ruheposition in der Darstellung der Fig. 7A nach links bewegt. Es sei angemerkt, daß die Betätigung des Drehhebels 4 selbstverständlich auch über ein Bremsgestänge erfolgen kann, so daß der Bremszylinder 42 gegebenenfalls an einem anderen Ort plaziert werden kann, falls der Einbauraum für die Bremsscheibe begrenzt ist.

Die dem halbschalenförmigen Drehlager 30 abgewandte Seite des Drehhebels 4 ist über einen als Nocken dienenden Exzenter 6 mit einer Traverse 7 gekoppelt, die sich innerhalb des Bremssattels 2 im wesentlichen parallel zur Drehachse der Bremsscheibe 1 erstreckt und in dieser Ebene verschiebbar gelagert ist. An ihrem der Bremsscheibe 1 zugewandten Ende weist die Traverse 7 eine sacklochartige Ausnehmung auf, die von einem in Richtung zur Bremsscheibe 1 auskragenden, rohrartigen Ansatz umgeben ist. Dieser Ansatz der Traverse 7 ist in einer entsprechenden Ausnehmung des Bremssattels 2 rechtwinklig zur Ebene der Bremsscheibe 1 unter Beibehaltung eines derartigen Spiels schiebegelagert, daß die Traverse 7 geringfügige Schwenkbewegungen in der Zeichnungsebene ausführen kann. Innerhalb der Ausnehmung ist eine Spiralfeder 78 angeordnet, die zwischen die Traverse 7 und das dr Bremsscheibe 1 zugewandte Ende des Bremssattels 2 eingespannt ist und dadurch die Traverse 7 zum Drehhebel 4 hin vorspannt.

Wie insbesondere den Längsschnitten der Figuren 1A, 2A, 3A, und 4A entnehmbar ist, weist die Traverse 7 an beiden Seiten jeweils eine mit einem Innengewinde versehene Bohrung auf, in der jeweils eine Stellspindel 70 bzw. 71 justierbar verschraubt ist, deren Außengewinde in einem entsprechend geformten Innengewinde der Traverse 7 gefährt ist. An dem der Bremsscheibe 1 zugewandten Ende jeder der Stellspindeln 70 und 71 ist ein sich kegelförmig verbreiterndes Druckstück 72 bzw. 73 befestigt. Da sich die beiden Stellspindeln 70 und 71 infolge ihrer Anordnung in der Traverse 7 senkrecht zur Ebene der Bremsscheibe 1 erstrecken, liegen die Druckstücke 72 und 73 mit ihren flachen Enden an einer Bremsbacke 10 an. Die Bremsbacke 10 ist insbesondere in Umfangsrichtung zur Bremsscheibe 1 über nicht gezeigte Halterungen quer zur Bremsscheibe 1 verschiebbar geführt, wobei die Halterungen entweder dem Bremssattel 2 oder einem Bremsträger zugeordnet sein können.

Im Inneren der Stellspindel 70 ist eine (nicht gezeigte) Nachstelleinrichtung angeordnet, die infolge einer Axialverzahnung drehfest mit der Stellspindel 70 gekoppelt und in axialer Richtung verschiebbar ist. Der genaue Aufbau einer bevorzugten Ausführungsform der Nachstelleinrichtung ist in der eingangs genannten DE-OS 40 34 165 der Anmelderin beschrieben, so daß für nähere Einzelheiten auf diese Druckschrift, auf die hiermit vollinhaltlich bezug genommen wird, verwiesen sei.

Die Nachstelleinrichtung wird bei jeder Betätigung des Drehhebels 4 um einen bestimmten Winkelbetrag gedreht, wodurch ein kontinuierliches Nachstellen der Bremse gewährleistet ist. Der genaue Aufbau einer derartigen Drehantriebseinrichtung für die Nachstelleinrichtung ist in der DE-OS 42 04 307 der Anmelderin beschrieben, so daß für nähere Einzelheiten auf diese Druckschrift, auf die hiermit vollinhaltlich bezug genommen wird, verweisen sei. Es sei jedoch darauf hingewiesen, daß die Art des Drehantriebs der Nachstelleinrichtung für die Erfindung nicht wesentlich ist; es ist alleine wichtig, daß bei jeder Betätigung der Bremse ein ausreichend starkes Nachstell-Drehmoment erzeugt und auf die Nachstelleinrichtung übertragen wird.

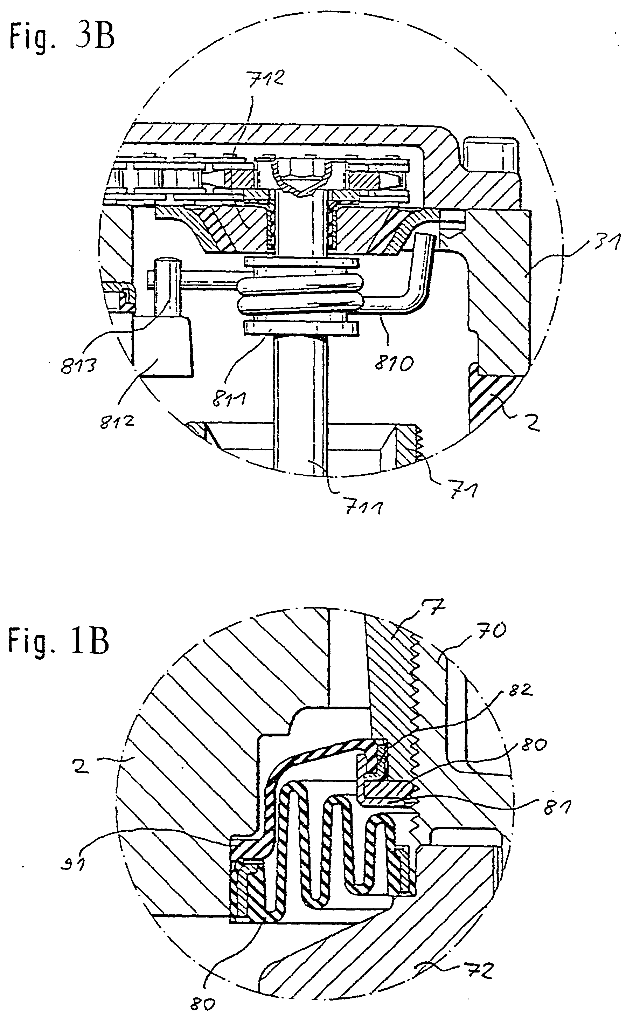

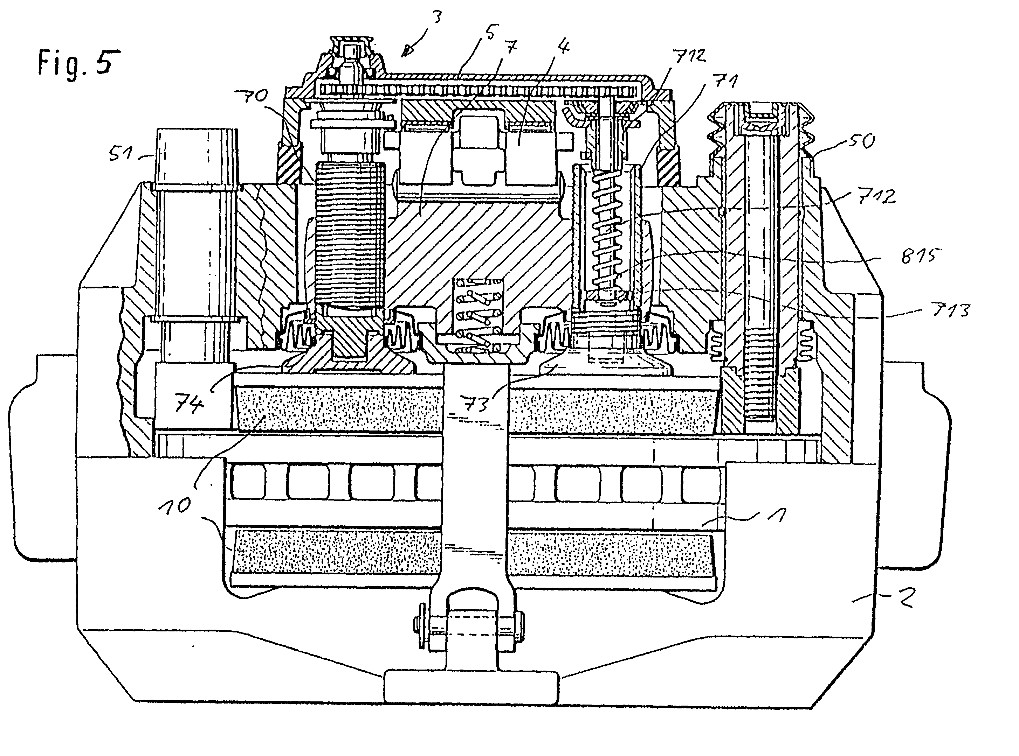

Im Inneren der gegenüberliegenden Stellspindel 71 ist keine Nachstelleinrichtung, sondern lediglich eine Mitnehmervorrichtung angeordnet, die aus einem Zahnrad 713 (siehe z. B. Fig. 4B) gebildet ist, das in eine entsprechende Axialverzahnung der Stellspindel 71 eingreift und an einer Antriebswelle 711 befestigt ist, die im Gehäuse in einem Lager 712 gelagert ist, wie es aus der Fig. 3B unmittelbar ersichtlich ist. Wie bereits eingangs erläutert wurde, ist es alternativ hierzu auch möglich, in der Stellspindel 71 ebenfalls eine Nachstelleinrichtung vorzusehen, was ggf. den Vorteil hat, daß das Gesamt-Nachstelldrehmoment verdoppelt werden kann. Jedoch versteuert diese Lösung die Zuspannvorrichtung, so daß vorzugsweise von der hier beschriebenen Mitnehmervorrichtung Gebrauch gemacht wird.

Nachfolgend wird zum besseren Verständnis der Funtionsweise der Zuspannvorrichtung ihr Arbeitsprinzip kurz erläutert. Bei Druckluftbeaufschlagung des Bremszylinders 42 wird der Betätigungsarm 4a gemäß Fig. 7A nach links verschwenkt, wodurch der am Drehhebel 4 wirkende Exzenter 6 um eine entsprechend den Hebelgesetzen verringerte Strecke gleichfalls nach links verschoben wird. Die Traverse 7 wird daher entgegen der Vorspannkraft der Spiralfeder 78 um diese Wegstrecke zur Bremsscheibe 1 hin gedrückt. Die an der Traverse 7 über die Stellspindeln 70 und 71 befestigten Druckstücke 72 bzw. 73 drücken folglich unter Überwindung des Lüftspiels (das in der Praxis ca. 0,4 mm beträgt) die Bremsbacke 10 gegen die Bremsscheibe 1. Wenn der Betätigungsarm 4a weiter nach links verschwenkt wird, verschiebt sich der Bremssattel aufgrund der auf die Bremsscheibe 1 augeübten Kraft in Fig. 1 nach rechts, so daß schließlich auch die linke Bremsbacke 10 gegen die Bremsscheibe 1 gepreßt wird. Da das Außengewinde der Stellspindeln 70 und 71 und das jeweils zugeordnete Innengewinde der Traverse 7 so dimensioniert sind, daß im druckbeaufschlagten Zustand entgegen der Zuspannrichtung eine Selbsthemmung auftritt, können sich die Stellspindeln nicht in diese Richtung wegbewegen, so daß der Bremsdruck solange aufrechterhalten bleibt, bis der Drehhebel 4 freigegeben wird.

Wenn die beiden Bremsbacken 10 im Verlauf des vorstehend erläuterten Zuspannvorgangs um eine vorbestimmte, einem Soll-Lüftspiel entsprechende Strecke verschoben worden sind, wird die Nachstelleinerichtung vom Drehhebel 4 betätigt. Sofern das Lüftspiel korrekt eingestellt ist, liegen beide Bremsbacken 10 zu diesem Zeitpunkt an der Bremsscheibe 1 an. Infolgedessen spricht eine in der Nachstelleinrichtung vorgesehene Rutschkupplung an, so daß die Stellspindel 70 und die mit ihr synchronisierte Stellspindel 71 nicht verstellt werden. Wenn demgegenüber ein zu großes Lüftspiel vorliegt, was beispielsweise nach einem Belagwechsel oder bei zunehmendem Verschleiß der Bremsbacken der Fall ist, werden die Stellspindeln 70 und 71 von der Nachstelleinrichtung um eine bestimmte Strecke gedreht und bringen dadurch das Lüftspiel, gegebenenfalls nach mehrmaliger Betätigung der Bremse, auf den Sollwert. Auf diese Weise ist gewährleistet, daß die erfindungsgemäße Scheibenbremse bis zum vollständigen Abrieb der Bremsbacken 10 funktionsfähig bleibt.

Nachstehend wird unter Bezugnahme auf die Fig. 1A und 1B ein erstes Ausführungsbeispiel näher erläutert, mit dem erreicht wird, daß die Stellspindeln 70 und 71 selbst bei starker Rüttelbeanspruchung oder dgl. Keine Drehbewegung ausführen. Eine derartige Drehbewegung hätte zur Folge, daß die der Zuspannvorrichtung 3 zugeandte Bremsbacke 10 näher zur Oberfläche der Bremsscheibe 1 gedrückt werden würde, so daß sich das Lüftspiel entsprechend verringert. Diese Verringerung des Lüftspiels könnte im schlimmsten Fall sogar zum Blockieren der Scheibenbremse führen, was unter allen Umständen verhindert werden muß.

Gemäß Fig. 1B, die den in Fig. 1A gezeigten Ausschnitt in vergrößerter Darstellung wiedergibt, ist am unteren Rand der Gewindebohrung der Traverse 7, in der die jeweilige Stellspindel 70 bzw. 71 verschraubt ist, ein Reibring 80 aus Gummi oder ähnlichem elastomeren Material befestigt. Der Innendurchmesser dieses Reibrings 80 ist etwas kleiner als der Außendurchmesser der Stellspindel 70 bzw. 71. Der Reibring 80 übt demzufolge auf die betreffende Stellspindel ein Reibmoment aus, das verhindert, daß sich die Stellspindel bei Rüttelbeanspruchung selbsttätig dreht. Eine unerwünschte Änderung des Lüftspiels kann somit sicher verhindert werden.

Gemäß der Darstellung in Fig. 1B ist der Innenraum der Zuspannvorrichtung mittels eines Faltenbalgs 90 und einer inneren Abdichtulippe 91 vor dem Eindringen von Wasser oder Schmutzteilen geschützt. Die innere Abdichtlippe 91 ist hierbei in einer Ausnehmung befestigt, die die Gewindebohrung der Trverse 7 an ihrem unteren Ende umgibt. Als Befestigungselement ist ein umlaufender Spannring 82 vorgesehen, der die Dichtlippe 91 sicher festhält. Der Spannring 82 weist ein zusätzliches Winkelteil 81 auf, das gemäß der Darstellung in Fig. 1B so geformt ist, daß eine Tasche gebildet wird, die den erfindungsgemäßen Reibring 80 aufnimmt. Infolgedessen ist es möglich, den Reibring 80 durch die gezeigte, relativ geringfügige Modifikation der Befestigung der Dichtlippe 91 sicher und genau zu plazieren. Darüber hinaus wird eine zusätzliche Abdichtwirkung erzielt.

Selbstverständlich ist es möglich, den Reibring 80 auch am gehäuseinneren Austritt und der jeweiligen Stellspindel anzuordnen. Gegebenenfalls kann auch eine Doppelanordnung sowohl am gezeigten äußeren als auch am inneren Austritt der Stellspindel in Erwägung gezogen werden.

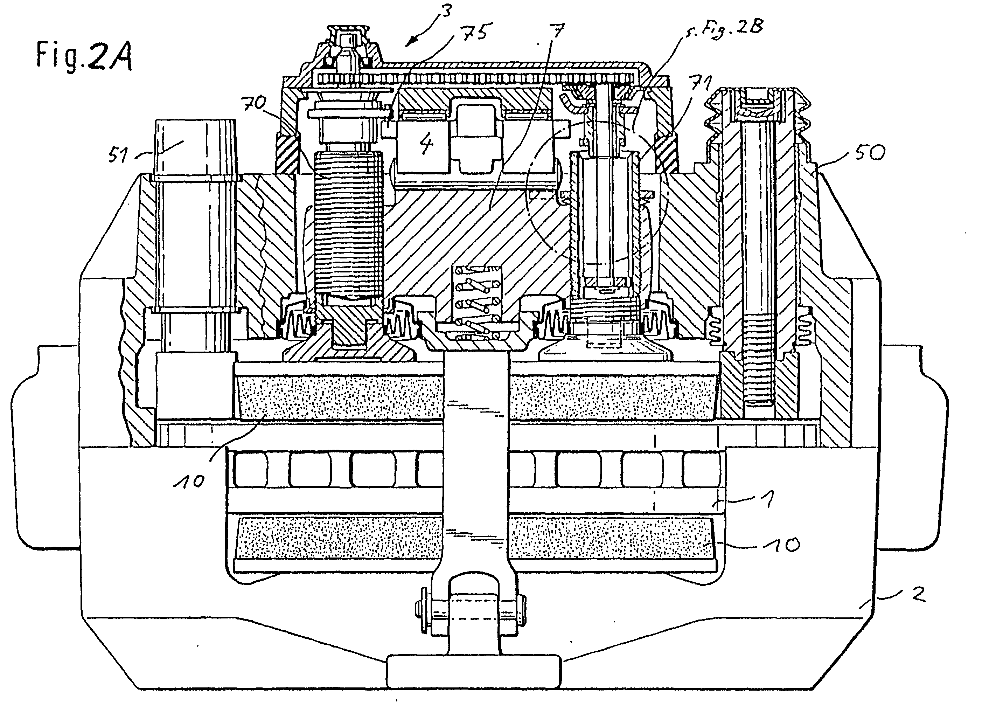

In den Fig. 2A und 2B ist ein weiteres Ausführungsbeispiel gezeigt, bei dem ein selbständiges Drehen der Stellspindel mittels einer Kontermutter 800 verhindert wird. Diese Kontermutter 800 ist etwas oberhalb des gehäuseinneren Austritts der Stellspindel 70 bzw. 71 angeordnet und durch einen Vorsprung, eine Ausnehmung oder dgl. An einer Drehung gehindert. Die Art und Weise der jeweiligen Drehsicherung der Kontermutter 80, die in Fig. 2B linkerhand gestrichelt angedeutet ist, ist nicht weiter von Bedeutung und kann nach Belieben modifiziert werden. Wie aus Fig. 2B ferner ersichtlich ist, wird die Kontermutter 800 durch eine Tellerfeder 801 in axialer Richtung vorgespannt. Infolgedessen tritt zwischen dem Innengewinde der Kontermutter 800 und dem Außengewinde der gezeigten Stellspindel 71 eine durch die Federkraft der Tellerfeder 801 definierte Reibung auf, die ein entsprechendes Bremsmoment erzeugt. Dieses Bremsmoment wird wie im Falle des vorstehend erläuterten Reibrings so gewählt, daß einerseits eine ungewollte Drehung der Stellspindel verhindert werden kann und daß andererseits die Nachstellbewegung der Stellspindel nicht zu stark behindert wird.

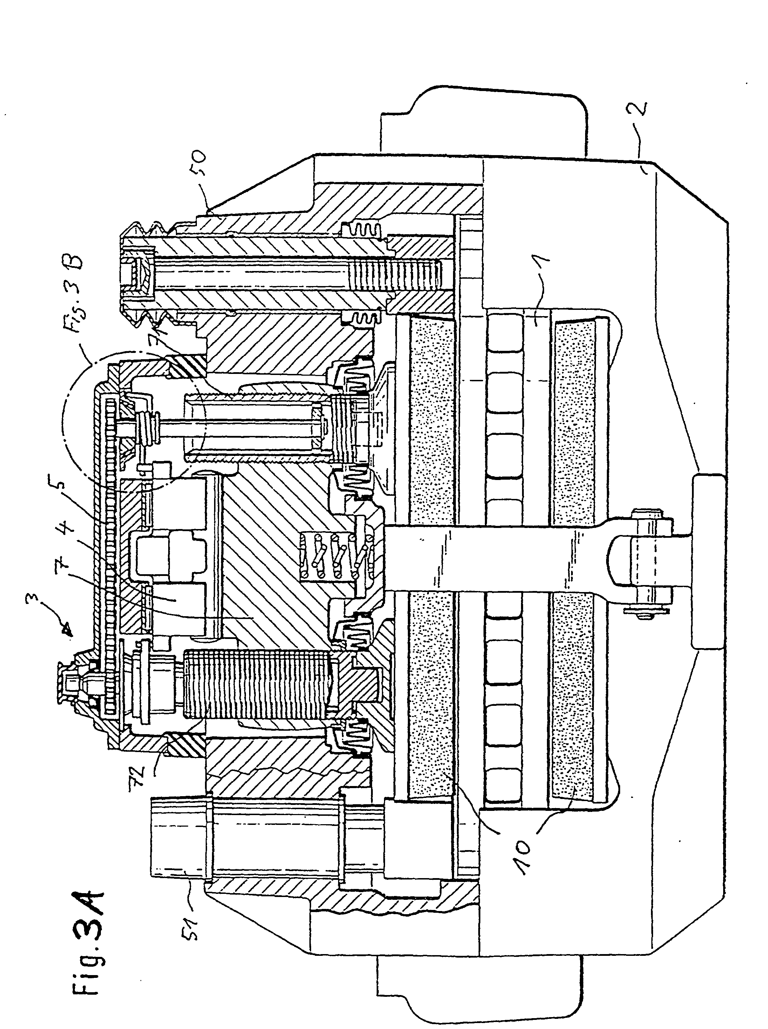

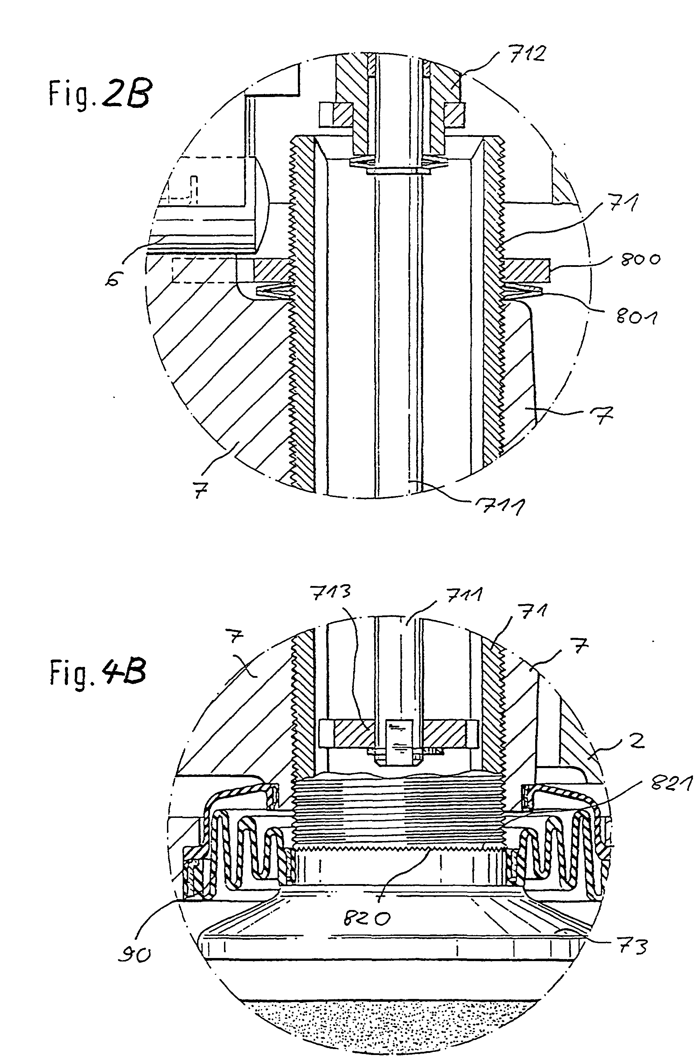

Die beiden vorstehend beschriebenen Ausführungsbeispiele basieren auf dem Prinzip, das Außengewinde der jeweiligen Stellspindel mit einem geeigneten Reibmoment zu beaufschlagen. Nachstehend werden anhand der Fig. 3A und 3B sowie 5 zwei weitere Ausführungsbeispiele der Erfindung beschrieben, denen das Prinzip zugrundeliegt, das auf die Stellspindeln auszuübende Bremsmoment dadurch zu erzeugen, daß in dem Kraftübertragungsweg zwischen Nachstelleinrichtung und Gewindespindel eine Feder angeordnet wird, die das Reibmoment des Kraftübertragungswegs entsprechend erhöht.

Bei der in den Fig. 3A und 3B gezeigten Ausführungsform der Erfindung ist eine Schraubenfeder 810 vorgesehen, die unter Zwischenschaltung einer Spindel 811 um die Antriebswelle 711 der Gewindespindel 71 herumgewickelt ist. Mit ihrem einen, in Fig. 3B rechts gezeigten Ende ist die Schraubenfeder 810 in einer Ausnehmung eines oberen Gehäuseteils 31 der Zuspannvorrichtung befestigt bzw. an einer Drehung gehindert. Das in Fig. 3B rechts dargestellte, andere Ende der Schraubenfeder 810 liegt an einem Stift 813 an, der an einem Vorsprung 812 des Drehhebels 4 befestigt ist. Die Schraubenfeder 810 ist so dimensioniert und die Lage des Stifts 813 ist so gewählt, daß die Schraubenfeder 810 im gelösten Zustand der Bremse die Spindel 811 und damit die Antriebswelle 711 zuspannt. Über das am unteren Ende der Antriebswelle 711 sitzende Zahnrad 713 (Siehe Fig. 4B), ist die Stellspindel 71 somit daran gehindert, bei einer Rüttelbewegung oder dgl. selbsttätig zu drehen. Auch die zweit Stellspindel 70 ist an einer Drehung gehindert, da die Blockierung der Antriebswelle 711 über die als Kette realisierte Synchronisationseinrichtung 5 übertragen wird.

Wenn der Drehhebel 4 zum Bremsen betätigt wird, wird der an ihm befestigte Stift 813 in gleicher Weise verschwenkt, d. h. gemäß der Darstellung der Fig. 3B nach hinten. Dadurch wird die Schraubenfeder 810 schließlich soweit entspannt, daß sie kein Reibmoment mehr auf die Spindel 811 ausübt. Die Antriebswelle 711 ist zu diesem Zeitpunkt frei drehbar, so daß die Nachstellung bei Bedarf problemlos erfolgen kann.

In Fig. 5 ist eine Variante der vorstehend beschriebenen Ausführungsform gezeigt, bei der eine um die Antriebswelle 711 der Gewindespindel 71 herumgewickelte Schraubenfeder vorgesehen ist, die in axialer Richtung auf das am Ende der Antriebswelle 711 sitzende Zahrad 713 einwirkt. Da die Schraubenfeder 815 mit ihrem bremsscheibenabgewandten Ende am Lager 712 der Antriebswelle 711 anliegt, erzeugt die Schraubenfeder 815 eine axiale Spannung, die auf die innenliegende Fläche des Zahnrads 713 ein entsprechende Reibmoment ausübt. Dadurch wird das Reibmoment des gesamten Kraftübertragungswegs von der in der linken Stellspindel 71 angeordneten Nachstelleinrichtung über die Synchronisationseinrichtung 5 hinüber zur rechten Stellspindel 71 in gleichem Maße erhäht. Somit wird ebenfalls verhindert, daß sich die beiden Stellspindeln unter Einwirkung einer Rüttelbeanspruchung oder dgl. unbeabsichtigt verstellen; eine Änderung des Soll-Lüftspiegels ist somit ebenfalls ausgeschlossen.

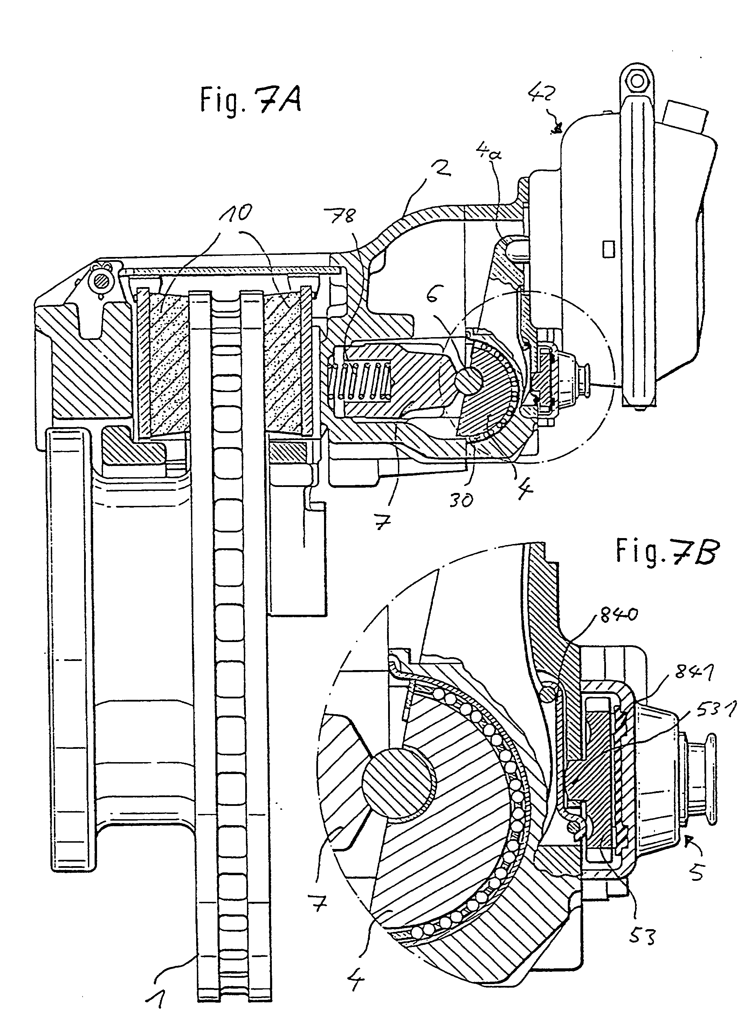

Die Ausführungsform der Fig. 5 bietet im Vergleich zur vorstehend beschriebenen Ausführungsform den zusätzlichen Vorteil, daß die Schraubenfeder 815 aufgrund ihrer Drehelastizität einen permanenten Rückdreheffekt hervorruft, der bewirkt, daß die jeweiligen Übertragungselemente der Synchronisationseinrichtung 5 unter ständiger Vorspannung stehen. Insbesondere dann, wenn die Synchronisationeinrichtung wie im Falle des in Fig. 7A und 7B gezeigten Ausführungsbeispiels aus einem Getriebezug in Form mehrerer Zahnräder gebildet ist, wird mit dieser Vorspannung erreicht, daß die Übertragungselemente bzw. Zahnräder der Synchronisationseinrichtung auch dann keinem erhöhten Verschleiß ausgesetzt sind, wenn eine hohe Rüttelbelastung auftritt.

Sämtliche bislang erläuterten Ausführungsbeispiele basieren auf dem Prinzip, die Stellspindeln zumindest im gelösten Zustand der Bremse mit einem bestimmten Bremsmoment zu beaufschlagen. Wenn hingegen eine zweispindelige Zuspannvorrichtung mit einer koppelnden Synchronisationseinrichtung vorgesehen ist, wie dies in sämtlichen Ausführungsbeispielen der Fall ist, ist es alternativ hierzu jedoch auch möglich, eine Einrichtung vorzusehen, die die Synchronisationseinrichtung im gelösten Zustand der Bremse blockiert. Auch auf diese Weise wird erreicht, daß die beiden Stellspindeln bei Rüttelbeanspruchung nicht selbsttätig drehen können, so daß eine ungewollte Änderung des Lüftspiels vermieden wird. Nachstehend werden zwei bevorzugte Ausführungsbeispiele für dieses alternative Prinzip der Erfindung beschrieben.

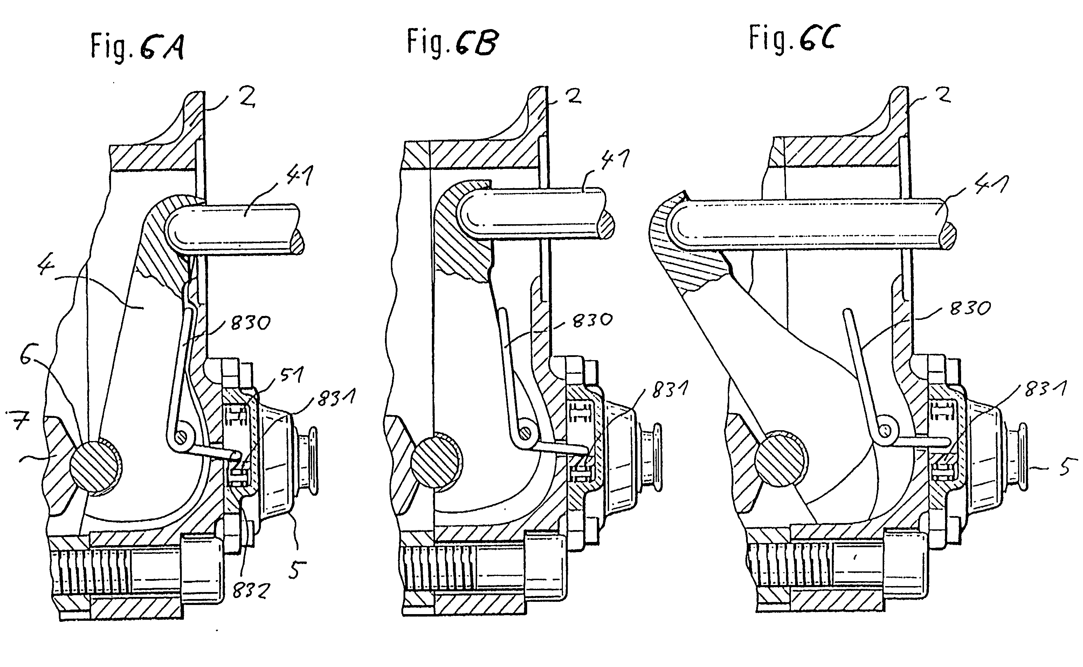

Die erste, anhand der fig. 6A bis 6C erläuterte Ausführungsform dieser Variante ist für eine Synchronisationseinrichtung vorgesehen, bei der die Kraftübertragung mittels einer Transmissionseinrichtung in Form einer Gliederkette 51 erfolgt. Alternativ hierzu kann es sich beispielsweise auch um einen Zahnriemen oder dgl. handeln. Gemäß Fig. 6A ist auf der bremsscheibenabgewandten Seite des Drehhebels 4 ein Federelement 830 in der Weise befestigt, daß das zur Synchronisationseinrichtung 5 hin weisende stiftförmige Ende 832 des Federelements 830 eine bodenseitige Öffnung der Synchronisationseinrichtung 5 durchgreift und an einem verschiebbar gelagerten Element 831 federnd anliegt. Wie aus Fig. 6A unmittelbar ersichtlich ist, drückt das verschiebbar gelagerte Element 831 infolge der Federkraft des Stifts 832 den betreffenden Abschnitt der Gliederkette 51 gegen eine Wandung bzw. Führung des Gehäuses der Synchonisationseinrichtung 5. Die Gliederkette 51 wird folglich eingeklemmt, so daß sie blockiert und die mit ihr gekoppelten Stellspindeln an einer Drehung hindert.

Wenn der Drehhebel 4 gemäß der Darstellung in den Fig. 6B und 6C beim Zuspannen der Bremse von einer Betätigungsstange 41 des Bremszylinders nach links verschwenkt wird, gibt das stiftförmige Ende 832 des Federelements 830 das verschiebbare Element 831 frei, sodass dieses nicht mehr federbelastet ist; demzufolge wird die Klemmung der Gliederkette 51 beendet, sodass die Synchronisationseinrichtung eine gegebenenfalls erforderliche Nachstellbewegung der Nachstelleinrichtung übertragen kann.

Anstelle des verschiebbaren Elements 831 kann gegebenenfalls ein elastisches Teil vorgesehen werden, das sich bei anliegendem Stift 832 soweit zur Gliederkette 51 hin ausbeult, dass diese eingeklemmt wird.

In den Fig. 7A und 7B ist eine Ausführungsform dargestellt, die zum Blockieren einer solchen Synchronisationseinrichtung vorgesehen ist, bei der die Kraftübertragung mittels mehrerer Zahnräder erfolgt, die einen Getriebezug bilden. Wie insbesondere aus Fig. 7B zu erkennen ist, ist beispielsweise das mittlere Zahnrad 53 der Synchronisationseinrichtung 5 über einen Lagerzapfen 531 in einer entsprechenden Lagerbohrung drehbar gelagert. Am bremsscheibenabgewandten Ende des Drehhebels 4 sitzt eine Blattfeder 840, die im gezeigten, gelösten Zustand der Bremse das untere Ende des Lagerzapfens 531 berührt, wodurch das Zahnrad 53 mit einem nach außen gerichteten Axialdruck beaufschlagt wird. Auf der der äußeren Seite des Zahnrads 53 zugewandten Seite der Gehäuseabdeckung der Synchronisationseinrichtung 5 ist ein aus elastomerem Material gebildetes, scheibenförmiges Element 841 befestigt; da das Zahnrad 53 auf seiner äußeren Fläche mit einer Stimverzahnung oder dgl. Versehen ist, wird das Zahnrad 53 infolge des von der Blattfeder 840 ausgeübten Drucks von der elastomeren Scheibe 841 abgebremst. Die Synchronisationseinrichtung 5 ist somit blockiert, sodass eine unbeabsichtigte Drehung der Stellspindeln verhindert wird. Wenn der Drehhebel bei Betätigung der Bremse nach links verschwenkt wird, gerät die Blattfeder 840 außer Eingriff mit dem unteren Ende des Lagerzapfens 531 des Zahnrads 53, wodurch das Zahnrad 53 nicht länger von der Scheibe 841 abgebremst wird. Somit kann sich das Zahnrad 53 ungehindert drehen, sodass die Synchronisationseinrichtung 5 eine eventuell erforderliche Nachstellbewegung zur anderen Stellspindel übertragen kann.

Die elastomere Scheibe 831 kann beispielsweise aus Gummimaterial bestehen.

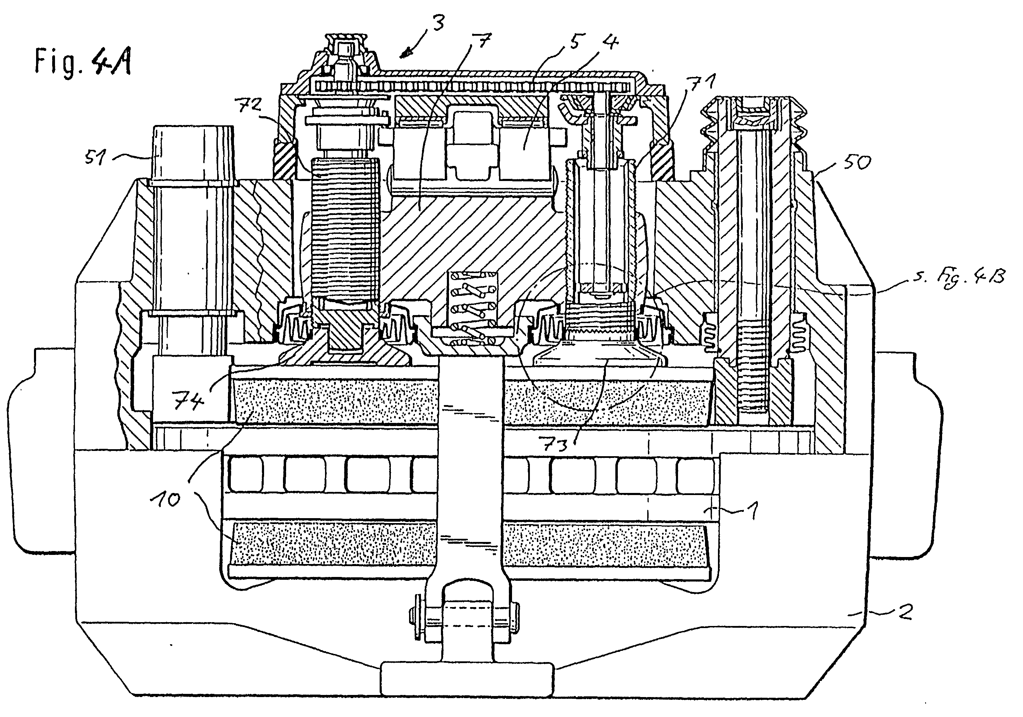

In den Fig. 4A und 4B ist eine noch weitere Ausführungsform gezeigt, bei der das bremsscheibenseitige Ende der Stellspindel 71 mit einer Stimverzahnung 821 versehen ist, die in eine entsprechende Gegen-Strinverzahnung 820 ihres Druckstückes eingreift. Da das Druckstück 73 aufgrund seiner Anlage an der Bremsbacke 10 sowie aufgrund der Einspannung durch den Faltenbalg 90 nicht drehen kann, ist die Stellspindel 71 ebenfalls an einer Drehung gehindert, sodass bei einer Rüttelbeanspruchung keine unbeabsichtigte Verstellung des Lüftspiels erfolgen kann. Die Zahnhöhe der Stirnverzahnung 820 bzw. 821 ist so gewählt, dass sie dem gewünschten Soll-Lüftspiel entspricht. Wenn das Lüftspiel aufgrund des Abriebs der Bremsbacken 10 das Soll-Lüftspiel übersteigt, geraten die beiden Stimverzahnungen außer Eingriff, sodass die Nachstelleinrichtung die Stellspindeln zum erneuten Einstellen des Soll-Lüftspiels drehen kann. Somit wird erreicht, dass auch bei extremer Rüttelbeanspruchung stets ein konstantes Soll-Lüftspiel vorliegt.

In der Ausführungsform der Fig. 4A und 4B ist die Stirnverzahnung lediglich in der rechten, über der Synchronisationseinrichtung 5 mit der linken Stellspindel 72 gekoppelten Stellspindel 71 vorgesehen. Gegebenenfalls kann jedoch auch in Erwägung gezogen werden, die linke Stellspindel 72 und deren Druckstück 74 mit einer entsprechenden Stirnverzahnung auszurüsten, obgleich dies aufgrund der Kupplung über die Synchronisationseinrichtung 5 nicht unbedingt erforderlich ist.

Obgleich die Erfindung anhand einer zweispindeligen Zuspannvorrichtung erläutert wurde, ist sie mit Ausnahme der auf die Synchronisationseinrichtung 5 gerichteten Ausführungsbeispiele selbstverständlich auch bei einer einspindeligen Zuspannvorrichtung verwendbar.

Die Erfindung ist auch bei einer solchen Synchronisationseinrichtung anwendbar, bei der eine im wesentlichen im Bereich der Achse des Exzenters verlaufende Welle vorgesehen ist, die an jeder Stirnseite ein Kegelrad aufweist, das mit einem entsprechenden Kegelrad der Nachstelleinrichtung kämmt, sodass ein entsprechender Winkeltrieb gebildet wird. Diese die oben erwähnten Zahnriemen oder Gliederketten ersetzende Welle benötigt keinerlei zusätzlichen Platz, sodass die Synchronisationseinrichtung eingebaut werden kann. Auch hier ist es möglich, die Welle und damit die Synchronisation durch geeignete, ggf. drehhebelbetätigte Klemmeinrichtungen bei Bedarf bzw. im gelösten Zustand der Bremse zu blockieren. Bezuglich näherer Einzelheiten einer derartigen Synchronisationseinrichtung wird im übrigen auf die **DE-OS 43 08 704** der Anmelderin voll inhaltlich bezug genommen.

## Patentansprüche

1. Druckluftbetätigte Scheibenbremse mit einem eine Bremsscheibe (1) umfassenden Bremssattel, auf dessen einer Seite eine Zuspannvorrichtung mit einem schwenkbar gelagerten Drehhebel (4) angeordnet ist, der mittels eines Exzenters (6) etwa längsmittig an einer sich parallel zur Drehachse erstreckenden Traverse (7) anliegt, die bezüglich der Bremsscheibe (1) verschiebbar geführt ist und in der mindestens eine Stellspindel (70, 71) verstellbar verschraubt ist, die über ein an ihrem bremsscheibenseitigen Ende sitzendes Drucksstück (72, 73) auf eine zuspannseitig im Bremssattel (2) bezüglich der Bremsscheibe (1) verschiebbar gelagerte Bremsbacke (10) einwirkt, wobei eine Nachstelleinrichtung auf die Stellspindel(n) (70, 71) derart einwirkt, dass das sich infolge Belagverschleiß ändernde Lüftspiel im wesentlichen konstant bleibt, wobei eine Einrichtung (80, 800, 810, 815) vorgesehen ist, die jedes Drehen der Stellspindel(n) (70, 71) bis zu einem bestimmten Drehmoment verhindert, **dadurch gekennzeichnet, daß** die Einrichtung durch eine in dem Kraftübertragungsweg zwischen Nachstelleinrichtung und Stellspindel (70, 71) angeordnete Feder (810, 815) gebildet ist, die das Reibmoment des Kraftübertragungsweges erhöht..

2. Scheibenbremse nach Anspruch 1, **dadurch gekennzeichnet, dass** als Feder (815) eine um eine Antriebswelle (711) der Stellspindel (70, 71) gewickelte Schraubenfeder vorgesehen ist, die in axialer Richtung auf ein am Ende der Antriebswelle sitzendes Zahnrad (713) einwirkt (Fig. 5).

3. Scheibenbremse nach Anspruch 2, **dadurch gekennzeichnet, dass** als Feder eine um eine Antriebswelle (711) der Stellspindel (70, 7 1) gewickelte Schraubenfeder (810) vorgesehen ist, die mit ihrem einen Ende am Gehäuse der Zuspannvorrichtung befestigt ist und mit ihrem anderen Ende in der Weise vom Drehhebel (4) zuspannbar ist, dass lediglich im gelösten Betriebszustand der Bremse ein Bremsmoment auf die Antriebswelle (711) ausgeübt wird (Fig. 3A, 3B).

## Claims

1. Compressed-air-actuated disc brake, with a brake calliper which surrounds a brake disc (1) and on one side of which is arranged a brake application device with a pivotably mounted rotary lever (4) which bears by means of an eccentric (6), approximately at the longitudinal centre, on a crossmember (7) which extends parallel to the axis of rotation and which is guided displaceably with respect to the brake disc (1) and in which is screwed adjustably at least one adjusting spindle (70, 71) which acts, via a thrust piece (72, 73) seated at that end of said adjusting spindle which is on the brake-disc side, on a brake shoe (10) mounted displaceably with respect to the brake disc (1) in the brake calliper (2) on the brake application side, a readjusting device acting on the adjusting spindle or spindles (70, 71) in such a way that the lifting play changing as a result of lining wear remains essentially constant, a device (80, 800, 810, 815) being provided, which prevents any rotation of the adjusting spindle or spindles (70, 71) up to a defined torque, **characterized in that** the device is formed by a spring (810, 815) which is arranged in the force transmission path between the readjusting device and the adjusting spindle (70, 71) and which increases the moment of friction of the force transmission path.

2. Disc brake according to Claim 1, **characterized in that** what is provided as a spring (815) is a helical spring which is wound around a drive shaft (711) of the adjusting spindle (70, 71) and which acts in the axial direction on a gearwheel (713) seated at the end of the drive shaft (Fig. 5).

3. Disc brake according to Claim 2, **characterized in that** what is provided as a spring is a helical spring (810) which is wound around a drive shaft (711) of the adjusting spindle (70, 71) and which with one end is fastened to the housing of the brake application device and with its other end can be tensioned by the rotary lever (4) in such a way that a braking torque is exerted on the drive shaft (711) solely in the released operating state of the brake (Fig. 3A, 3B).

## Revendications

1. Frein à disque à air comprimé comportant un étrier de frein comprenant un disque de frein (1) sur un côté duquel est disposé un dispositif de serrage du frein équipé d'un levier tournant (4) monté rotatif qui, par l'intermédiaire d'un excentrique (6), repose sur une traverse (7) s'étendant parallèlement à l'axe de rotation, approximativement au milieu de sa longueur, traverse qui est montée déplaçable par rapport au disque de frein (1) et dans laquelle est vissée, avec possibilité de déplacement, au moins une vis de réglage (70, 71) qui agit, par l'intermédiaire d'un élément de pression (72, 73) situé à son extrémité du côté du disque de frein, sur une mâchoire de frein (10) montée déplaçable par rapport au disque de frein (1), dans l'étrier de frein (2), du côté du dispositif de serrage du frein, un dispositif d'ajustage agissant sur la ou les vis de réglage (70, 71) de telle sorte que le jeu du frein, qui varie suite à l'usure de la garniture, reste sensiblement constant, un dispositif (80, 800, 810, 815) étant prévu pour empêcher toute rotation de la ou des vis de réglage (70, 71) jusqu'à un certain couple de rotation, **caractérisé en ce que** ce dispositif est constitué par un ressort (810, 815), monté dans la chaîne de transmission entre le dispositif d'ajustage et la ou les vis de réglage (70, 71), ressort qui augmente le couple de frottement de la chaîne de transmission.

2. Frein à disque selon la revendication 1, **caractérisé en ce qu'**est prévu, comme ressort (815), un ressort cylindrique enroulé autour d'un arbre d'entraînement (711) des vis de réglage (70, 71), qui agit, dans la direction axiale, sur une roue dentée (713) montée à l'extrémité de l'arbre d'entraînement (Fig. 5).

3. Frein à disque selon la revendication 2, **caractérisé en ce qu'** est prévu, comme ressort, un ressort cylindrique (810) enroulé autour d'un arbre d'entraînement (711) des vis de réglage (70, 71), qui, par l'une de ses extrémités, est fixé sur le boîtier du dispositif de serrage du frein et, par son autre extrémité, est susceptible d'être tendu par le levier tournant (4) de telle sorte qu'un couple de freinage ne soit exercé sur l'arbre d'entraînement (711) que lorsque le frein est desserré (Fig. 3A, 3B).
